# EUROPÄISCHE PATENTANMELDUNG

(11) **EP 4 428 424 A2**
(43) Veröffentlichungstag der Anmeldung: **11.09.2024**
(21) Anmeldenummer: 24184155.0
(22) Anmeldetag: 15.08.2019
(51) Int. Cl.: F16L 53/34

(54) **VORRICHTUNG UND VERFAHREN ZUM ERHITZEN EINES FLUIDES IN EINER ROHRLEITUNG**

(30) Priorität: 16.08.2018 EP 18189369
(62) Teilanmeldung aus: 19753091.8
(71) Anmelder: BASF SE, 67056 Ludwigshafen am Rhein (DE)
(72) Erfinder: Weck, Alexander, 67056 Ludwigshafen (DE); Laib, Heinrich, 67056 Ludwigshafen (DE)
(74) Vertreter: Altmann Stößel Dick Patentanwälte PartG mbB

(57) **Zusammenfassung**

Es wird eine Vorrichtung (112) zum Erhitzen eines Fluides vorgeschlagen. Die Vorrichtung (112) umfasst
- mindestens eine elektrisch leitfähige Rohrleitung (120) zur Aufnahme des Fluides
- mindestens eine elektrisch leitfähige Spule (110)
- mindestens eine Wechselspannungsquelle (114), welche mit der Spule (110) verbunden ist und eingerichtet ist, die Spule (110) mit einer Wechselspannung zu beaufschlagen.

Die Spule (110) ist eingerichtet durch die Beaufschlagung mit der Wechselspannung mindestens ein elektromagnetisches Feld zu erzeugen. Die Rohrleitung (120) und die Spule (110) sind derart angeordnet, dass das elektromagnetische Feld der Spule (110) einen elektrischen Strom in der Rohrleitung (120) induziert, welcher die Rohrleitung (120) durch Joulesche Wärme, welche bei Durchgang des elektrischen Stromes durch leitendes Rohrmaterial entsteht, zum Erhitzen des Fluides erwärmt.

## Beschreibung

Die Erfindung betrifft eine Vorrichtung und ein Verfahren zum Erhitzen eines Fluides in einer Rohrleitung.

Es ist bekannt Hochtemperaturprozesse in der Chemischen Industrie durch direkte Feuerung zu beheizen. Der überwiegende Anteil dieser Hochtemperaturprozesse nutzt Röhrenöfen, wie Steam-Cracker, Steam-Methan-Reformer, Dehydrierungen, Platforming und andere. Das Rauchgas dieser Öfen ist in der Regel die CO₂-Hauptemissionsquelle des jeweiligen Prozesses und, im Gegensatz zu stofflich prozessbedingter CO₂-Emission, beispielsweise aus der Wassergas-Shift Reaktion, durch Einkopplung der benötigten Prozessenergie in Form elektrischer Energie vermeidbar. Es ist bekannt die Rohre dieser Öfen, welche aus elektrisch leitfähigen Metallen bestehen, durch elektrische Ströme direkt aufgeheizt werden können.

Beispielsweise beschreibt WO 2015/197181 A1 eine Einrichtung zum Heizen eines Fluides mit zumindest einer elektrisch leitfähigen Rohrleitung zur Aufnahme des Fluides, und zumindest einer mit der mindestens einen Rohrleitung verbundenen Spannungsquelle. Die mindestens eine Spannungsquelle ist dazu ausgebildet, einen elektrischen Strom in der mindestens einen Rohrleitung zu erzeugen, der die mindestens eine Rohrleitung zum Heizen des Fluides erwärmt. Die mindestens eine Spannungsquelle weist M Außenleiter auf, wobei M eine natürliche Zahl größer oder gleich zwei ist. Die mindestens eine Spannungsquelle ist dazu ausgebildet, an den Au-ßenleitern eine Wechselspannung bereitzustellen. Jene Wechselspannungen sind gegeneinander um 2π/M phasenverschoben. Die Außenleiter sind so mit der mindestens einen Rohrleitung elektrisch leitend verbunden, dass eine Sternschaltung gebildet wird.

JPH08247546 A beschreibt eine Rohrleitung, welches durch ein aus Metall hergestelltes, flaches, ovales und aufgewickeltes Rohr gebildet wird. Heizspulen, die durch spiralförmiges Aufwickeln entlang jeder gekrümmten Oberfläche geformt werden, sind an einer Innenumfangsfläche und eine Außenumfangsfläche von Rohrleitungsreihen angebracht, wobei mehrere Rohrleitungen nebeneinander installiert sind.

Eine derartige Heizung der Rohre durch elektrischen Strom, erfordert jedoch eine elektrische Isolierung der bekannten hochoptimierten Rohraufhängungen, sowie eine Kontaktierung der Rohre zur Einleitung des Stromes. Weiter sind die Rohre im Wesentlichen durch die Prozessbedingungen in ihrem Material und Querschnitt bestimmt. Jedoch können große Querschnitte aufgrund der notwendigen Druckfestigkeit nur kleine Widerstände ergeben und damit sehr hohe notwendige Ströme bei kleiner Spannung. So können große Leiterquerschnitte der Zuleitungen notwendig sein, was hohe Verluste in denselben und aufwendige Hochstromnetzteile und Transformatoren bedingt.

Es ist daher Aufgabe der vorliegenden Erfindung, eine Vorrichtung und ein Verfahren zum Erhitzen eines Fluides bereitzustellen, welche die Nachteile bekannter Vorrichtungen und Verfahren zumindest weitgehend vermeiden. Insbesondere soll eine die Vorrichtung und das Verfahren technisch einfach zu realisieren und durchzuführen sein und auch kostengünstig sein.

Diese Aufgabe wurde durch eine Vorrichtung mit den Merkmalen der unabhängigen Ansprüche gelöst. Bevorzugte Ausgestaltungen der Erfindung sind u. a. in den zugehörigen Unteransprüchen und Unteranspruchsverknüpfungen angegeben.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben dem durch diese Begriffe eingeführten Merkmal, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe oder ähnliche Begriffe, wenn diese in Zusammenhang mit einem oder mehreren Elementen oder Merkmalen verwendet werden und ausdrücken sollen, dass das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt der vorliegenden Erfindung wird eine Vorrichtung zum Erhitzen eines Fluides vorgeschlagen. Unter einem "Fluid" wird im Rahmen der vorliegenden Erfindung ein gasförmiges und/oder flüssiges Medium verstanden, beispielsweise ein Prozessgas. Das Fluid kann beispielsweise ausgewählt sein aus der Gruppe bestehend aus: Wasser, Wasserdampf, einer Verbrennungsluft, einem Kohlenwasserstoffgemisch, einem zu spaltenden Kohlenwasserstoff. Beispielsweise kann das Fluid ein thermisch und/oder katalytisch zu spaltender Kohlenwasserstoff, insbesondere ein thermisch und/oder katalytisch zu spaltendes Gemisch aus Kohlenwasserstoffen, sein. Beispielsweise kann das Fluid Wasser oder Wasserdampf sein und zusätzlich einen thermisch und/oder katalytisch zu spaltenden Kohlenwasserstoff, insbesondere ein Gemisch aus thermisch und/oder katalytisch zu spaltenden Kohlenwasserstoffen, aufweisen. Das Fluid kann beispielsweise ein vorgewärmtes Gemisch aus thermisch und/oder katalytisch zu spaltenden Kohlenwasserstoffen und Wasserdampf sein. Auch andere Fluide sind denkbar.

Unter "Erhitzen eines Fluides" kann ein Vorgang verstanden werden, welcher zu einer Änderung einer Temperatur des Fluides führt, insbesondere zu einem Anstieg der Temperatur des Fluides, beispielsweise zu einem Erwärmen des Fluides. Das Fluid kann beispielsweise durch das Erhitzen bis zu einem vorgegebenen oder vorbestimmten Temperaturwert erwärmt werden. Der vorgegebene oder vorbestimmte Temperaturwert kann ein Hochtemperaturwert sein. Die Vorrichtung kann eingerichtet sein, das Fluid auf eine Temperatur im Bereich von 200 °C bis 1100 °C, bevorzugt von 200 °C bis 900 °C, besonders bevorzugt von 400 °C bis 850 °C, zu erwärmen. Beispielsweise kann das Fluid auf eine Temperatur im Bereich von 550°C bis 700°C erhitzt werden. Beispielsweise kann das Fluid eine Verbrennungsluft eines Reformerofens sein, welche vorgewärmt bzw. aufgeheizt wird, beispielsweise auf eine Temperatur im Bereich von 200 °C bis 900 °C, bevorzugt von 400 °C bis 850 °C. Auch andere Temperaturen und Temperaturbereiche sind jedoch denkbar. Die Vorrichtung kann eine Heizleistung ≥ 0,5 MW pro Rohrleitung aufweisen, wobei die Vorrichtung ein Rohrleitungssystem aufweisen kann, welches aus einer Mehrzahl von Rohrleitungen zusammengesetzt sein kann.

Die Vorrichtung kann Teil einer Anlage sein. Beispielsweise kann die Anlage ausgewählt sein aus der Gruppe bestehend aus: einem Steamcracker, einem Steamreformer, einer Vorrichtung zur Alkandehydrierung. Beispielsweise kann die Anlage eingerichtet sein mindestens ein Verfahren durchzuführen ausgewählt aus der Gruppe bestehend aus: Steamcracking, Steamreforming, Alkandehydrierung.

Die Vorrichtung kann beispielsweise Teil eines Steamcrackers sein. Unter "Steamcracking" kann ein Verfahren verstanden werden, bei welchem durch thermisches Cracken längerkettige Kohlenwasserstoffe, beispielsweise Naphtha, Propan, Butan und Ethan sowie Gasöl und Hydrowax, in Gegenwart von Wasserdampf in kurzkettige Kohlenwasserstoffe umgewandelt werden. Bei dem Steamcracking kann Wasserstoff, Methan, Ethen und Propen als Hauptprodukt, sowie u.a. Butene und Pyrolysebenzin erzeugt werden. Der Steamcracker kann eingerichtet sein das Fluid auf eine Temperatur im Bereich von 550°C bis 1100°C zu erwärmen.

Beispielsweise kann die Vorrichtung Teil eines Reformerofens sein. Unter "Steamreforming" kann ein Verfahren zur Herstellung von Wasserstoff und Kohlenoxiden aus Wasser und kohlenstoffhaltigen Energieträgern, insbesondere Kohlenwasserstoffen wie Erdgas, Leichtbenzin, Methanol, Biogas oder Biomasse verstanden werden. Beispielsweise kann das Fluid auf eine Temperatur im Bereich von 200 °C bis 800 °C, bevorzugt von 400 °C bis 700 °C, erwärmt werden.

Beispielsweise kann die Vorrichtung Teil einer Vorrichtung zur Alkandehydrierung sein. Unter einer "Alkandehydrierung" kann ein Verfahren zur Herstellung von Alkenen durch Dehydrierung von Alkanen, beispielsweise Dehydrierung von Butan zu Butenen (BDH) oder Dehydrierung von Propan zu Propen (PDH), verstanden werden. Die Vorrichtung zur Alkandehydrierung kann eingerichtet sein das Fluid auf eine Temperatur im Bereich von 400°C bis 700°C zu erwärmen.

Die Vorrichtung umfasst:
- mindestens eine elektrisch leitfähige Rohrleitung zur Aufnahme des Fluides
- mindestens eine elektrisch leitfähige Spule
- mindestens eine Wechselspannungsquelle, welche mit der Spule verbunden ist und eingerichtet ist, die Spule mit einer Wechselspannung zu beaufschlagen.

Die Spule ist eingerichtet durch die Beaufschlagung mit der Wechselspannung mindestens ein elektromagnetisches Feld zu erzeugen. Die Rohrleitung und die Spule sind derart angeordnet, dass das elektromagnetische Feld der Spule einen elektrischen Strom in der Rohrleitung induziert. Der elektrische Strom, auch Wirbelstrom genannt, erwärmt zum Erhitzen des Fluides die Rohrleitung durch Joulesche Wärme, welche bei Durchgang des elektrischen Stromes durch leitendes Rohrmaterial entsteht.

Auf diese Weise können auch die Rohrleitung durchströmende Fluide erwärmt werden, die nicht elektrisch leitfähig sind.

Unter einer Rohrleitung kann im Rahmen der vorliegenden Erfindung eine beliebige geformte Vorrichtung verstanden werden, welche eingerichtet ist das Fluid aufzunehmen und zu transportieren. Die Rohrleitung kann ein Prozessrohr sein. Die Rohrleitung kann mindestens ein Rohrleitungssegment aufweisen. Unter einem Rohrleitungssegment kann ein Teilbereich einer Rohrleitung verstanden werden. Geometrie und/oder Oberflächen und/oder Material der Rohrleitung kann abhängig von einem zu transportierenden Fluid sein. Unter einer "elektrisch leitfähigen Rohrleitung" kann verstanden werden, dass die Rohrleitung, insbesondere das Material der Rohrleitung, eingerichtet ist elektrischen Strom zu leiten. Die Rohrleitung kann als ein Reaktionsrohr eines Reformerofens ausgebildet sein. Die Rohrleitung kann als Reaktionsrohr und/oder als Rohrreaktor ausgebildet sein. Die Rohrleitung kann insbesondere dazu eingerichtet sein, dass in ihr chemische Reaktionen durchgeführt werden und/oder ablaufen.

Die Vorrichtung kann eine Mehrzahl von Rohrleitungen aufweisen. Die Vorrichtung kann L Rohrleitungen aufweisen, wobei L eine natürliche Zahl größer oder gleich eins ist. Beispielsweise kann die Vorrichtung mindestens ein, zwei, drei, vier, fünf oder auch mehr Rohrleitungen aufweisen. Die Vorrichtung kann beispielsweise bis zu mehreren hundert Rohrleitungen aufweisen. Die Rohrleitungen können identisch oder verschieden ausgestaltet sein. Die Rohrleitungen können verschiedene Anzahlen von Schenkeln oder Windungen aufweisen. Die Rohrleitungen können verschiedene Anzahlen von Verzweigungen aufweisen. Die Rohrleitungen können als sogenannte Singlepass oder Multipass Rohre ausgestaltet sein. Die Rohrleitungen können identische oder verschiedene Geometrien und/oder Oberflächen und/oder Materialien aufweisen. Die Rohrleitungen können durchverbunden sein und so ein im Wesentlichen planares Rohrsystem zur Aufnahme des Fluides bilden. Unter einem "Rohrsystem" kann eine Vorrichtung aus mindestens zwei, insbesondere miteinander verbundenen, Rohrleitungen verstanden werden. Unter einem "im Wesentlichen planaren Rohrsystem" kann eine Anordnung der Rohrleitungen in einer Ebene verstanden werden, wobei geringe Abweichungen von einer ebenen Anordnung von weniger als 5%, bevorzugt weniger als 1% möglich sind. Das Rohrsystem kann zu- und abführende Rohrleitungen aufweisen. Das Rohrsystem kann mindestens einen Einlass zur Aufnahme des Fluides aufweisen. Das Rohrsystem kann mindestens einen Auslass zur Ausgabe des Fluides aufweisen. Unter "durchverbunden" kann verstanden werden, dass die Rohrleitungen miteinander in einer Fluidverbindung stehen. So können die Rohrleitungen derart angeordnet und verbunden sein, dass das Fluid die die Rohrleitungen nacheinander durchströmt. Die Rohrleitungen können parallel zu einander verschaltet sein, derart, dass das Fluid mindestens zwei Rohrleitungen parallel durchströmen kann. Die Rohrleitungen, insbesondere die parallel geschalteten Rohrleitungen, können derart eingerichtet sein unterschiedliche Fluide parallel zu transportieren. Insbesondere können für einen Transport von verschiedenen Fluiden die parallel geschalteten Rohrleitungen, zu einander verschiedene Geometrien und/oder Oberflächen und/oder Materialien aufweisen. Insbesondere für den Transport eines Fluides, können mehrere oder sämtliche der Rohrleitungen parallel konfiguriert sein, so dass das Fluid auf jene parallel konfigurierten Rohrleitungen aufteilbar ist. Auch Kombinationen von einer seriellen und parallelen Schaltung sind denkbar.

Unter einer "Spule" kann ein beliebiges Element verstanden werden, welches eine Induktivität aufweist und geeignet ist, bei Stromfluss ein Magnetfeld zu erzeugen und/oder umgekehrt. Beispielsweise kann eine Spule mindestens eine vollständige oder teilweise geschlossene Leiterschleife oder Windung umfassen. Unter einer "elektrisch leitfähigen Spule" kann eine Spule verstanden werden, welche derart ausgestaltet ist, dass die Spule bei Anlegen einer elektrischen Spannung und/oder eines elektrischen Stroms einen magnetischen Fluss erzeugt. Die elektrisch leitfähige Spule kann eine Induktionsspule sein. Die elektrisch leitfähige Spule kann mindestens ein leitendes Material aufweisen, beispielsweise Kupfer oder Aluminium. Windungsform und Anzahl der Windungen der Spule kann derart ausgewählt sein, dass eine maximale Stromstärke und/oder maximale Spannung und/oder maximale Frequenz erreicht wird. Insbesondere können im Vergleich zu einer direkten Widerstandsheizung von Rohrleitungen deutlich verringerte Ströme bei erhöhter Spannung möglich sein.

Die Vorrichtung kann eine Mehrzahl von Spulen aufweisen. Die Vorrichtung kann M Spulen aufweisen, wobei M eine natürliche Zahl größer oder gleich zwei ist. Beispielsweise kann die Vorrichtung mindestens zwei, drei, vier, fünf oder auch mehr Spulen aufweisen. Die Spulen können ein im Wesentlichen planares Spulenarray bilden. Unter einem "Spulenarray" kann eine Spulenanordnung umfassend mindestens zwei Spulen verstanden werden. Unter einem "im Wesentlichen planaren" Spulenarray kann eine Anordnung der Spulen in einer Ebene verstanden werden, wobei geringe Abweichungen von einer ebenen Anordnung von weniger als 5%, bevorzugt weniger als 1% möglich sind. Das Spulenarray kann einem Verlauf der Rohrleitung angepasst sein. Insbesondere kann das Spulenarray einem sich Verlauf längs der Rohrleitung ändernden Prozesswärmebedarf angepasst sein. Beispielsweise kann das Spulenarray derart ausgestaltet sein, dass eine dem Prozess und Verlauf der Rohrleitungen angepasster Energieeintrag möglich ist.

Unter einer "Wechselspannungsquelle" kann eine Vorrichtung verstanden werden, welche eingerichtet ist eine Wechselspannung bereitzustellen. Unter einer "Wechselspannung" kann eine Spannung verstanden werden, deren Höhe und Polarität sich zeitlich regelmäßig wiederholt. Beispielsweise kann die Wechselspannung eine sinusförmige Wechselspannung sein. Die Wechselspannungsquelle ist mit der Spule verbunden, insbesondere elektrisch verbunden, und ist eingerichtet die Spule mit der Wechselspannung zu beaufschlagen. Die Vorrichtung kann eine Mehrzahl von Wechselspannungsquellen aufweisen. Bei einer Vorrichtung mit einem Spulenarray kann jeder Spule oder einer Gruppe von Spulen je eine Wechselspannungsquelle zugeordnet sein, welche mit der jeweiligen Spule und/oder Gruppe von Spulen verbunden ist, insbesondere elektrisch über mindestens eine elektrische Verbindung. Die Wechselspannungsquellen können jeweils mit einer Regelungsmöglichkeit zu Anpassung einer Höhe und/oder Frequenz der Wechselspannung ausgestaltet sein. Die Wechselspannungsquellen können unabhängig voneinander elektrisch regelbar sein. So können auch komplexe Änderungen des Energieeintrages längs des Verlaufs der Rohrleitung und damit eine präzise Steuerung des Temperaturfeldes möglich werden.

Die Spule ist eingerichtet durch die Beaufschlagung mit der Wechselspannung mindestens ein elektromagnetisches Feld zu erzeugen. Die Spule ist insbesondere eingerichtet in Antwort auf die Beaufschlagung mit der Wechselspannung mindestens ein elektromagnetisches Feld zu erzeugen. Die Rohrleitung und die Spule sind derart angeordnet, dass das elektromagnetische Feld der Spule einen elektrischen Strom in der Rohrleitung induziert. Insbesondere kann ein Abstand der Rohrleitung und der Spule derart sein, dass die Rohrleitung in dem elektromagnetischen Feld der Spule angeordnet ist. Der so in der Rohrleitung erzeugt elektrische Strom kann die Rohrleitung durch Joulesche Wärme, welche bei Durchgang des elektrischen Stromes durch leitendes Rohrmaterial entsteht, zum Erhitzen des Fluides erwärmen. Unter "Erwärmen der Rohrleitung" kann ein Vorgang verstanden werden, welcher zu einer Änderung einer Temperatur der Rohrleitung führt, insbesondere einen Anstieg der Temperatur der Rohrleitung.

Die Vorrichtung kann mindestens einen Wärmeisolator aufweisen, welcher eingerichtet ist die Spule, insbesondere das Spulenarray, von der Temperatur der Rohrleitung, insbesondere dem Rohrsystem, zu entkoppeln. Unter einem "Wärmeisolator" kann ein Element verstanden werden, welches eine Wärmeleitung zwischen der Rohrleitung, insbesondere dem Rohrsystem, und der Spule, insbesondere dem Spulenarray, zumindest teilweise oder vollständig verhindert. Beispielsweise kann das im Wesentlichen planare Spulenarray in eine elektrisch nicht leitfähige und nicht magnetische Wärmeisolationsmasse eingebettet sein. Der Wärmeisolator kann mindestens ein Element aufweisen ausgewählt aus der Gruppe bestehend aus: keramischen Fasermatten, einem Keramikschaum, Feuerfeststeinen, Feuerfestbeton.

Die Spule kann mindestens ein Leiterrohr aufweisen. Unter einem "Leiterrohr" kann eine Vorrichtung verstanden werden, welche eingerichtet ist von einer Flüssigkeit und/oder einem Gas durchströmt zu werden. Die Vorrichtung kann eingerichtet sein mindestens ein Kühlmittel durch das Leiterrohr zu leiten. Eine Verlustleistung der Spule und ein Wärmeeintrag durch den Wärmeisolator aus einem Prozessraum, in welchem die Rohrleitungen angeordnet sind, in die Spulen können so durch eine direkte Kühlung der Spulen abgeführt werden. Beispielsweise kann die Spule aus Kupfer- oder Aluminiumrohren ausgestaltet sein, durch welche das Kühlmittel geleitet wird.

Das Leiterrohr kann druckfest ausgestaltet sein. So kann es möglich sein das Leiterrohr direkt mit Kesselspeisewasser zu beaufschlagen und entweder in dem Leiterrohr direkt oder in einer externen Dampftrommel nach einer Drosselung des Druckwassers aus dem Leiterrohr Dampf zu erzeugen. Der Dampf kann als Prozess- oder Maschinendampf Verwendung finden. Die Rohrleitung kann in einem Gasraum angeordnet sein. Unter einem "Gasraum" kann ein Bauraum verstanden werden, welcher eingerichtet ist mindestens ein Gas aufzunehmen. Insbesondere kann der Gasraum ein Gas-durchströmbarer Bauraum sein. Die Rohrleitung kann frei hängend in dem Gasraum angeordnet sein. So werden temperaturbedingte Längenänderungen der Rohrleitung nicht behindert. Aufhängungen und Verfahrensweise sind dem Fachmann bekannt. Eine Länge und/oder Breite und/oder Höhe des Gasraumes kann derart ausgestaltet sein, um Lage- und Längenänderungen der Rohrleitung und deren Aufhängung durch Erwärmung zuzulassen. Beispielsweise kann das Rohrsystem eine Ebene aufspannen. Eine "Länge" des Gasraumes kann eine Ausdehnung des Gasraumes horizontal zum Verlauf des Rohrsystems sein. Eine "Höhe" des Gasraumes kann eine Ausdehnung in der Ebene des Rohrsystems senkrecht zu der Länge des Gasraumes sein. Eine "Breite" des Gasraumes kann eine Ausdehnung des Gasraumes senkrecht zur Ebene des Rohrsystems sein. Im Gegensatz zu direkt befeuerten Strahlungskesseln ist eine Mindestgasschichtdicke nicht erforderlich, so dass die Breite des Gasraumes die Rohrleitung so eng umschließen kann, wie es deren Lage- und Längenänderungen durch Erwärmung zulassen, und/oder dass im Falle eines Rohrreißers das Prozessgas in der Ebene des planaren Rohrsystems gefahrlos abgeführt werden kann. Die Vorrichtung kann eingerichtet sein, den Gasraum mit einem chemisch inerten und sauerstofffreien Inertgas, beispielsweise Stickstoff, zu durchströmen, insbesondere langsam. So kann die Rohrleitung vor Verzunderungen geschützt werden und es können gleichzeitig eventuelle geringe Leckagen sicher abgeführt werden, bevor sich große Mengen brennbaren Gases akkumulieren. Die Vorrichtung kann mindestens eine Leckageerkennungsvorrichtung aufweisen. Die Leckageerkennungsvorrichtung kann eingerichtet sein eine Gaszusammensetzung an einem Ausgang des Gasraumes zu überwachen.

Die Vorrichtung kann eine Mehrzahl von Spulenarrays und/oder Rohrsystemen aufweisen. Die Spulenarrays und die Rohrsysteme können in einer horizontalen Richtung alternierend in mindestens einem Stapel angeordnet sein. Insbesondere kann ein Spulenarray jeweils zwischen zwei Rohrsystemen angeordnet sein. In einer Ausführungsform kann der Stapel an einem Ende, beispielsweise einer Frontseite ein Spulenarray aufweisen, wobei der Stapel in eine horizontale Richtung des Stapels abwechselnd Rohrsysteme und weitere Spulenarrays aufweist. An einer Rückseite des Stapels kann ebenfalls ein Spulenarray oder ein Rohrsystem vorgestehen sein. In einer Ausführungsform kann der Stapel an der Frontseite ein Rohrsystem aufweisen, wobei der Stapel in eine horizontale Richtung des Stapels abwechselnd Spulenarrays und Rohrsysteme aufweist. An einer Rückseite des Stapels kann ebenfalls ein Spulenarray oder ein Rohrsystem vorgestehen sein. Die Vorrichtung kann eine unterschiedliche oder gleiche Anzahl von Rohrsystemen und Spulenarrays aufweisen. Beispielsweise kann die Vorrichtung N Rohrsysteme und O Spulenarray aufweisen, wobei N und O natürliche Zahlen größer oder gleich zwei sind. Beispielsweise kann die Vorrichtung mindestens zwei, drei, vier, fünf oder auch mehr Spulenarrays und Rohrsysteme aufweisen. Durch ein derartiges Stacking von Rohrsystemen und Spulenarrays können Röhrenöfen der benötigten Kapazität zusammengestellt werden. Durch Nutzung der jeweiligen front- und rückseitigen elektromagnetischen Felder von Spulenarrays links und rechts eines Rohrsystems zur Heizung des Rohrsystems können Feldverluste gering gehalten werden. Weiter vorteilhaft kann eine gegenseitige Feldverstärkung der Spulenarrays links und rechts eines Rohrsystems sein. Weiter vorteilhaft kann das symmetrische Feld um das jeweilige Rohrsystem sein.

Der Stapel kann mindestens ein Kompensationsspulenarray aufweisen. Unter einem "Kompensationsspulenarray" kann ein Spulenarray verstanden werden, welches eingerichtet ist ein front- und/oder rückseitiges elektromagnetisches Feld des Stapels möglichst gering zu halten. Der Stapel kann an den freien Enden durch eine Kombination aus für niedrige Temperaturen, beispielsweise Vorwärmer oder Edukt-Verdampfer, genutzter Rohrleitung oder genutztem Rohrsystem und Kompensationsspulenarray derart abgeschlossen sein, dass ein externes elektromagnetisches Restfeld möglichst gering ist.

Die erfindungsgemäße Vorrichtung ist insbesondere vorteilhaft, da sie eine völlige mechanische und thermische Entkopplung von elektrischer Beheizung und Rohrleitungen, die eine weitgehende Übernahme bewährter Prozessrohrdesigns mit einer bei geringer Temperatur betriebenen Beheizung, beispielsweise in Spulenebene 150 bis 250°C, je nach gewünschtem Druck des erzeugten Dampfes, und einer Nutzung der elektrischen Verluste in Form von Prozessdampf mit einer verbesserten und verzögerungsfreien Regelbarkeit verbindet.

In einem weiteren Aspekt wird im Rahmen der vorliegenden Erfindung ein Verfahren zum Erhitzen eines Fluides vorgeschlagen. In dem Verfahren wird eine erfindungsgemäße Vorrichtung verwendet. Das Verfahren umfasst die folgenden Schritte:
- Bereitstellen mindestens einer elektrisch leitfähigen Rohrleitung zur Aufnahme des Fluides
- Aufnahme des Fluides in die Rohrleitung
- Bereitstellen mindestens einer Spule
- Bereitstellen mindestens einer Wechselspannungsquelle, wobei die Spule mit der Wechselspannungsquelle verbunden ist, und Beaufschlagen der Spule mit einer Wechselspannung
- Erzeugen mindestens eines elektromagnetischen Feldes durch die Beaufschlagung der Spule mit der Wechselspannung
- Induzieren eines elektrischen Stroms in der Rohrleitung durch das elektromagnetische Feld der Spule, welcher die Rohrleitung durch Joulesche Wärme, welche bei Durchgang des elektrischen Stromes durch leitendes Rohrmaterial entsteht, zum Erhitzen des Fluides erwärmt.

Das Bereitstellen der mindestens einen Spule kann ein Bereitstellen mindestens einer aus einem mit Kühlfluid durchströmbaren Leiter gefertigten Spule umfassen.

Hinsichtlich Ausführungsformen und Definitionen kann auf obige Beschreibung der Vorrichtung verwiesen werden. Die Verfahrensschritte können in der angegebenen Reihenfolge durchgeführt werden, wobei einer oder mehrere der Schritte zumindest teilweise auch gleichzeitig durchgeführt werden können und wobei einer oder mehrere der Schritte mehrfach wiederholt werden können. Darüber hinaus können weitere Schritte unabhängig davon, ob sie in der vorliegenden Anmeldung erwähnt werden oder nicht, zusätzlich ausgeführt werden.

Zusammenfassend sind im Rahmen der vorliegenden Erfindung folgende Ausführungs-formen besonders bevorzugt:
Ausführungsform 1: Vorrichtung zum Erhitzen eines Fluides umfassend
   - mindestens eine elektrisch leitfähige Rohrleitung zur Aufnahme des Fluides;
   - mindestens eine elektrisch leitfähige Spule;
   - mindestens eine Wechselspannungsquelle, welche mit der Spule verbunden ist und eingerichtet ist, die Spule mit einer Wechselspannung zu beaufschlagen; wobei die Spule eingerichtet ist durch die Beaufschlagung mit der Wechselspannung mindestens ein elektromagnetisches Feld zu erzeugen, wobei die Rohrleitung und die Spule derart angeordnet sind, dass das elektromagnetische Feld der Spule einen elektrischen Strom in der Rohrleitung induziert, welcher die Rohrleitung durch Joulesche Wärme, welche bei Durchgang des elektrischen Stromes durch leitendes Rohrmaterial entsteht, zum Erhitzen des Fluides erwärmt.
Ausführungsform 2: Vorrichtung nach der vorhergehenden Ausführungsform, dadurch gekennzeichnet, dass die Vorrichtung eine Mehrzahl von Spulen aufweist, wobei die Spulen ein im Wesentlichen planares Spulenarray bilden.
Ausführungsform 3: Vorrichtung nach der vorhergehenden Ausführungsform, wobei das Spulenarray einem Verlauf der Rohrleitung angepasst ist.
Ausführungsform 4: Vorrichtung nach einer der zwei vorhergehenden Ausführungsformen, dadurch gekennzeichnet, dass die Vorrichtung eine Mehrzahl von Wechselspannungsquellen aufweist, wobei jeder Spule des Spulenarrays eine Wechselspannungsquelle zugeordnet ist, wobei die Wechselspannungsquellen jeweils mit einer Regelungsmöglichkeit zu Anpassung einer Höhe und/oder Frequenz der Wechselspannung ausgestaltet sind, wobei die Wechselspannungsquellen unabhängig voneinander elektrisch regelbar sind.
Ausführungsform 5: Vorrichtung nach einer der vorhergehenden Ausführungsformen, dadurch gekennzeichnet, dass die Vorrichtung eine Mehrzahl von Rohrleitungen aufweist, wobei die Rohrleitungen durchverbunden sind und so ein im Wesentlichen planares Rohrsystem zur Aufnahme des Fluides bilden.
Ausführungsform 6: Vorrichtung nach der vorhergehenden Ausführungsform, dadurch gekennzeichnet, dass die Vorrichtung eine Mehrzahl von Spulenarrays und/oder Rohrsystemen aufweist, wobei die Spulenarrays und die Rohrsysteme in einer horizontale Richtung alternierend in mindestens einem Stapel angeordnet sind.
Ausführungsform 7: Vorrichtung nach einer der vorhergehenden Ausführungsformen, dadurch gekennzeichnet, dass die Vorrichtung mindestens einen Wärmeisolator aufweist, welcher eingerichtet ist die Spulen von der Temperatur der Rohrleitung zu entkoppeln, wobei der Wärmeisolator mindestens ein Element aufweist ausgewählt aus der Gruppe bestehend aus: keramischen Fasermatten, einem Keramikschaum, Feuerfeststeinen, Feuerfestbeton.
Ausführungsform 8: Vorrichtung nach einer der vorhergehenden Ausführungsformen, dadurch gekennzeichnet, dass die Spule mindestens ein Leiterrohr aufweist, wobei die Vorrichtung eingerichtet ist mindestens ein Kühlmittel durch das Leiterrohr zu leiten.
Ausführungsform 9: Vorrichtung nach der vorhergehenden Ausführungsform, dadurch gekennzeichnet, dass das Leiterrohr druckfest ausgestaltet ist.
Ausführungsform 10: Vorrichtung nach einer der vorhergehenden Ausführungsformen, dadurch gekennzeichnet, dass die Rohrleitung in einem Gasraum angeordnet ist, wobei die Rohrleitung frei hängend in dem Gasraum angeordnet ist.
Ausführungsform 11: Vorrichtung nach der vorhergehenden Ausführungsform, dadurch gekennzeichnet, dass eine Länge und/oder Breite und/oder Höhe des Gasraumes derart ausgestaltet ist, um Lage- und Längenänderungen durch Erwärmung zuzulassen.
Ausführungsform 12: Vorrichtung nach einer der zwei vorhergehenden Ausführungsformen, dadurch gekennzeichnet, dass die Vorrichtung eingerichtet ist, den Gasraum mit einem chemisch inerten und sauerstofffreien Inertgas zu durchströmen.
Ausführungsform 13: Vorrichtung nach einem der drei vorhergehenden Ausführungsformen, dadurch gekennzeichnet, dass die Vorrichtung mindestens eine Leckageerkennungsvorrichtung aufweist, wobei die Leckageerkennungsvorrichtung eingerichtet ist eine Gaszusammensetzung an einem Ausgang des Gasraumes zu überwachen.
Ausführungsform 14: Anlage umfassend mindestens eine Vorrichtung nach einer der vorhergehenden Ausführungsformen.
Ausführungsform 15: Anlage nach der vorhergehenden Ausführungsform dadurch gekennzeichnet, dass die Anlage ausgewählt ist aus der Gruppe bestehend aus: einem Steamcracker, einem Steamreformer, einer Vorrichtung zur Alkandehydrierung.
Ausführungsform 16: Verfahren zum Erhitzen eines Fluides unter Verwendung einer Vorrichtung gemäß einer der vorhergehenden Ausführungsformen, wobei das Verfahren die folgenden Schritte umfasst:
   - Bereitstellen mindestens einer elektrisch leitfähigen Rohrleitung zur Aufnahme des Fluides;
   - Aufnahme des Fluides in die Rohrleitung;
   - Bereitstellen mindestens einer elektrisch leitfähigen Spule
   - Bereitstellen mindestens einer Wechselspannungsquelle, wobei die Spule mit der Wechselspannungsquelle verbunden ist, und Beaufschlagen der Spule mit einer Wechselspannung
   - Erzeugen mindestens eines elektromagnetischen Feldes durch die Beaufschlagung der Spule mit der Wechselspannung
   - Induzieren eines elektrischen Stroms in der Rohrleitung durch das elektromagnetische Feld der Spule, welcher die Rohrleitung durch Joulesche Wärme, welche bei Durchgang des elektrischen Stromes durch leitendes Rohrmaterial entsteht, zum Erhitzen des Fluides erwärmt.
Ausführungsform 17: Verfahren nach der vorhergehenden Ausführungsform, wobei das Bereitstellen der mindestens einen Spule ein Bereitstellen mindestens einer aus einem mit Kühlfluid durchströmbaren Leiter gefertigten Spule umfasst.

### Kurze Beschreibung der Figuren

Weitere Einzelheiten und Merkmale der Erfindung ergeben sich aus der nachfolgenden Beschreibung von bevorzugten Ausführungsbeispielen, insbesondere in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigen:
- Figuren 1A und 1B: schematische Darstellungen eines Ausführungsbeispiels einer erfindungsgemäßen Spule und eines Ausführungsbeispiels eines erfindungsgemä-ßen Spulenarrays;
- Figur 2: eine schematische Darstellung eines Ausführungsbeispiels eines erfindungsgemäßen Rohrsystems; und
- Figuren 3A und 3B: eine Explosionszeichnung eines Ausführungsbeispiels einer erfindungsgemäßen Vorrichtung und eine perspektivische Darstellung eines weiteren Ausführungsbeispiels der Vorrichtung.

### Ausführungsbeispiele

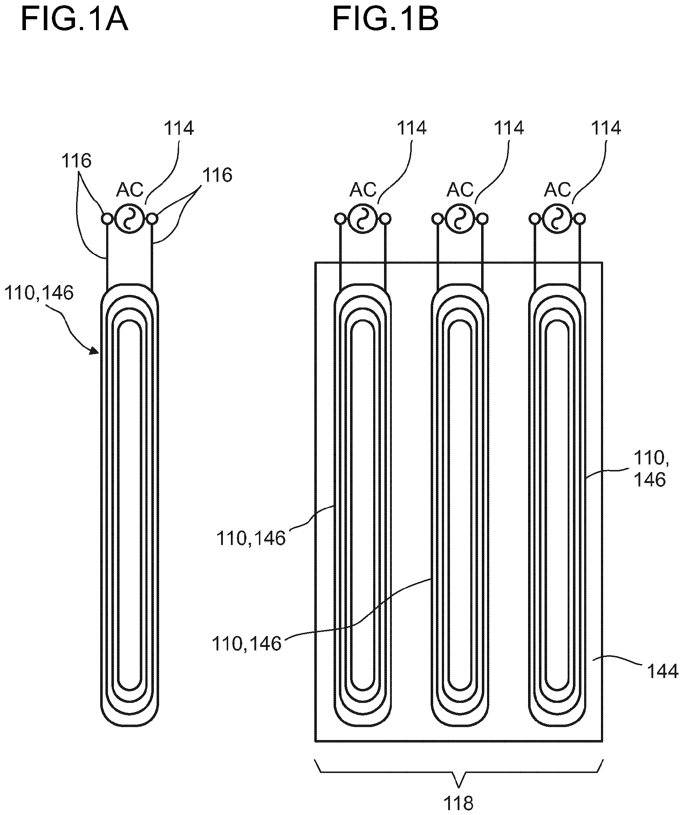

Figur 1A zeigt eine schematische Darstellung eines Ausführungsbeispiels einer erfindungsgemä-ßen elektrisch leitfähigen Spule 110 einer Vorrichtung 112 zum Erhitzen mindestens eines Fluides. Das Fluid kann beispielsweise ausgewählt sein aus der Gruppe bestehend aus: Wasser, Wasserdampf, einer Verbrennungsluft, einem Kohlenwasserstoffgemisch, einem zu spaltenden Kohlenwasserstoff. Beispielsweise kann das Fluid ein thermisch zu spaltender Kohlenwasserstoff, insbesondere ein thermisch zu spaltendes Gemisch aus Kohlenwasserstoffen, sein. Beispielsweise kann das Fluid Wasser oder Wasserdampf sein und zusätzlich einen thermisch zu spaltenden Kohlenwasserstoff, insbesondere ein Gemisch aus thermisch zu spaltenden Kohlenwasserstoffen, aufweisen. Das Fluid kann beispielsweise ein vorgewärmtes Gemisch aus thermisch zu spaltenden Kohlenwasserstoffen und Wasserdampf sein. Auch andere Fluide sind denkbar. Das Fluid kann beispielsweise durch das Erhitzen bis zu einem vorgegebenen oder vorbestimmten Temperaturwert erwärmt werden. Der vorgegebene oder vorbestimmte Temperaturwert kann ein Hochtemperaturwert sein. Beispielsweise kann das Fluid auf eine Temperatur im Bereich von 550°C bis 700°C erhitzt werden. Beispielsweise kann das Fluid eine Verbrennungsluft eines Reformerofens sein, welche vorgewärmt bzw. aufgeheizt wird, beispielsweise auf eine Temperatur im Bereich von 200 °C bis 800 °C, bevorzugt von 400 °C bis 700 °C. Auch andere Temperaturen und Temperaturbereiche sind jedoch denkbar.

Die Spule 110 kann mindestens eine vollständige oder teilweise geschlossene Leiterschleife oder Windung umfassen. Die Spule 110 kann bei Anlegen einer elektrischen Spannung und/oder eines elektrischen Stroms einen magnetischen Fluss erzeugt. Die elektrisch leitfähige Spule kann eine Induktionsspule sein. Die elektrisch leitfähige Spule 110 kann mindestens ein leitendes Material aufweisen, beispielsweise Kupfer oder Aluminium. Die Spule 110 kann aus rohrförmigen Leitern aufgebaut sein, die mit Kühlmedium durchströmt werden. Windungsform und Anzahl der Windungen der Spule kann derart ausgewählt sein, dass eine maximale Stromstärke und/oder maximale Spannung und/oder maximale Frequenz erreicht wird.

Die Vorrichtung 112 weist mindestens eine Wechselspannungsquelle 114. Die Wechselspannungsquelle 114 ist mit der Spule 110 verbunden, insbesondere elektrisch verbunden. Die Vorrichtung 112 kann zu diesem Zweck mindestens ein Verbindungselement 116, beispielsweise einen Anschluss und/oder einer Zuleitung, aufweisen, welches die Spule 110 und die Wechselspannungsquelle 114 elektrisch verbindet. Die Wechselspannungsquelle 114 ist eingerichtet die Spule 110 mit einer Wechselspannung zu beaufschlagen. Die Spule 110 ist eingerichtet ist Antwort auf die Beaufschlagung mit der Wechselspannung mindestens ein elektromagnetisches Feld zu erzeugen.

Die Vorrichtung 112 kann eine Mehrzahl von Spulen 110 aufweisen. Die Vorrichtung 112 kann M Spulen 110 aufweisen, wobei M eine natürliche Zahl größer oder gleich zwei ist. Beispielsweise kann die Vorrichtung 112 mindestens zwei, drei, vier, fünf oder auch mehr Spulen 110 aufweisen. Die Spulen 110 können ein im Wesentlichen planares Spulenarray 118 bilden. Ein Ausführungsbeispiel eines Spulenarrays 118 zeigt Figur 1B. Die Vorrichtung 112 kann eine Mehrzahl von Wechselspannungsquellen 114 aufweisen. Bei einer Vorrichtung 112 mit einem Spulenarray 118 kann jeder Spule 110 oder einer Gruppe von Spulen 110 je eine Wechselspannungsquelle 114 zugeordnet sein, welche mit der jeweiligen Spule 110 und/oder Gruppe von Spulen 110 verbunden ist, insbesondere elektrisch über mindestens eine elektrische Verbindung. Die Wechselspannungsquellen 114 können jeweils mit einer Regelungsmöglichkeit zu Anpassung einer Höhe und/oder Frequenz der Wechselspannung ausgestaltet sein. Die Wechselspannungsquellen 114 können unabhängig voneinander elektrisch regelbar sein.

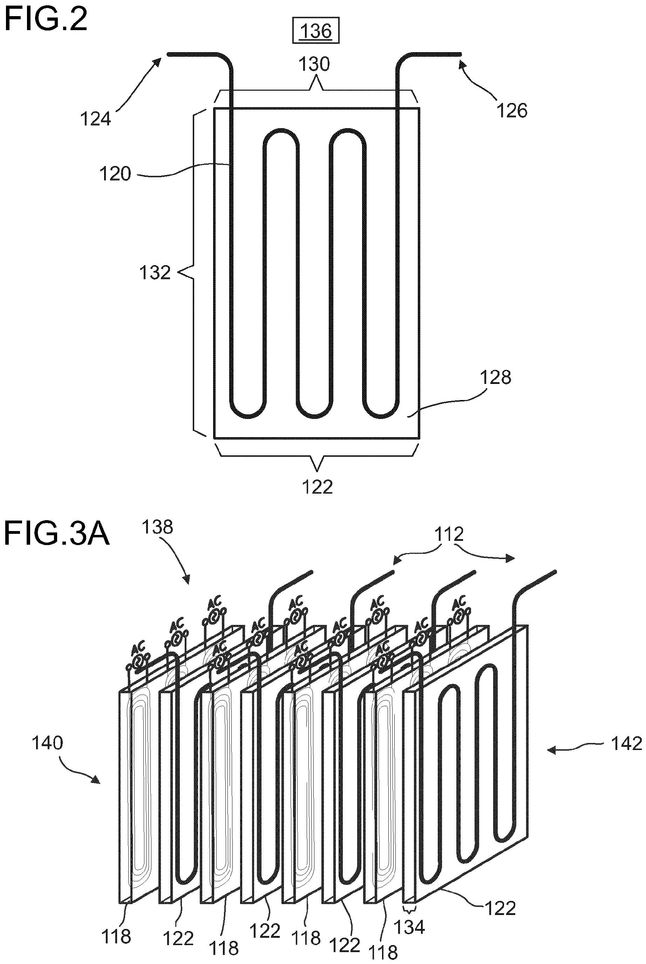

Die Vorrichtung 112 mindestens eine elektrisch leitfähige Rohrleitung 120 zur Aufnahme des Fluides. Die Rohrleitung 120 kann ein Prozessrohr sein. Die Rohrleitung 120 kann als ein Reaktionsrohr eines Reformerofens ausgebildet sein. Die Rohrleitung 120 kann mindestens ein Rohrleitungssegment aufweisen. Geometrie und/oder Oberflächen und/oder Material der Rohrleitung 120 kann abhängig von einem zu transportierenden Fluid sein. Die Vorrichtung 112 kann eine Mehrzahl von Rohrleitungen 120 aufweisen. Die Vorrichtung 112 kann L Rohrleitungen 112 aufweisen, wobei L eine natürliche Zahl größer oder gleich zwei ist. Beispielsweise kann die Vorrichtung 112 mindestens zwei, drei, vier, fünf oder auch mehr Rohrleitungen 120 aufweisen. Die Vorrichtung 112 kann beispielsweise bis zu mehreren hundert Rohrleitungen 120 aufweisen. Die Rohrleitungen 120 können identisch oder verschieden ausgestaltet sein. Die Rohrleitungen 120 können verschiedene Anzahlen von Schenkeln oder Windungen aufweisen. Die Rohrleitungen 120 können verschiedene Anzahlen von Verzweigungen aufweisen. Die Rohrleitungen 120 können als sogenannte Singlepass oder Multipass Rohre ausgestaltet sein. Die Rohrleitungen 120 können identische oder verschiedene Geometrien und/oder Oberflächen und/oder Materialien aufweisen. Die Rohrleitungen 120 können durchverbunden sein und so ein im Wesentlichen planares Rohrsystem 122 zur Aufnahme des Fluides bilden. Ein Ausführungsbeispiel eines Rohrsystems 122 zeigt Figur 2. Das Rohrsystem 122 kann zu- und abführende Rohrleitungen 120 aufweisen. Das Rohrsystem 122 kann mindestens einen Einlass 124 zur Aufnahme des Fluides aufweisen. Das Rohrsystem 122 kann mindestens einen Auslass 126 zur Ausgabe des Fluides aufweisen. Die Rohrleitungen 120 können derart angeordnet und verbunden sein, dass das Fluid die die Rohrleitungen 120 nacheinander durchströmt. Die Rohrleitungen 120 können parallel zu einander verschaltet sein, derart, dass das Fluid mindestens zwei Rohrleitungen 120 parallel durchströmen kann. Die Rohrleitungen 120, insbesondere die parallel geschalteten Rohrleitungen 120, können derart eingerichtet sein unterschiedliche Fluide parallel zu transportieren. Insbesondere können für einen Transport von verschiedenen Fluiden die parallel geschalteten Rohrleitungen 120, zu einander verschiedene Geometrien und/oder Oberflächen und/oder Materialien aufweisen. Insbesondere für den Transport eines Fluides, können mehrere oder sämtliche der Rohrleitungen 120 parallel konfiguriert sein, so dass das Fluid auf jene parallel konfigurierten Rohrleitungen 120 aufteilbar ist. Auch Kombinationen von einer seriellen und parallelen Schaltung sind denkbar.

Die Rohrleitung 120 kann in einem Gasraum 128 angeordnet sein. Die Rohrleitung 120 kann frei hängend in dem Gasraum 128 angeordnet sein. So können Temperaturbedingte Längenänderungen der Rohrleitung 120 ermöglicht werden. Aufhängungen und Verfahrensweise sind dem Fachmann bekannt. Eine Länge 130 und/oder Höhe 132 und/oder Breite 134 des Gasraumes 128 kann derart ausgestaltet sein, um Lage- und Längenänderungen durch Erwärmung zuzulassen. Beispielsweise kann das Rohrsystem 122 eine Ebene aufspannen. Die Länge 130 des Gasraumes 128 kann eine Ausdehnung des Gasraumes 128 horizontal zum Verlauf des Rohrsystems 122 sein. Die Höhe 132 des Gasraumes 128 kann eine Ausdehnung in der Ebene des Rohrsystems 122 senkrecht zu der Länge 130 des Gasraumes 128 sein. Die Breite 134 des Gasraumes 128 kann eine Ausdehnung des Gasraumes 128 senkrecht zur Ebene des Rohrsystems 122 sein, siehe beispielsweise Figur 3A. Im Gegensatz zu direkt befeuerten Strahlungskesseln ist eine Mindestgasschichtdicke nicht erforderlich, so dass die Breite 134 des Gasraumes 128 die Rohrleitung 120 so eng umschließen kann, wie es dessen Lage- und Längenänderungen durch Erwärmung zulassen, und/oder dass im Falle eines Rohrreißers das Prozessgas in der Ebene des planaren Rohrsystems 122 gefahrlos abgeführt werden kann. Die Vorrichtung 122 kann eingerichtet sein, den Gasraum 128 mit einem chemisch inerten und sauerstofffreien Inertgas, beispielsweise Stickstoff, zu durchströmen, insbesondere langsam. So kann die Rohrleitung 120 vor Verzunderungen geschützt werden und es können gleichzeitig eventuelle geringe Leckagen sicher abgeführt werden, bevor sich große Mengen brennbaren Gases akkumulieren. Die Vorrichtung 112 kann mindestens eine Leckageerkennungsvorrichtung 136 aufweisen. Die Leckageerkennungsvorrichtung 136 kann eingerichtet sein eine Gaszusammensetzung an einem Ausgang des Gasraumes 128 zu überwachen.

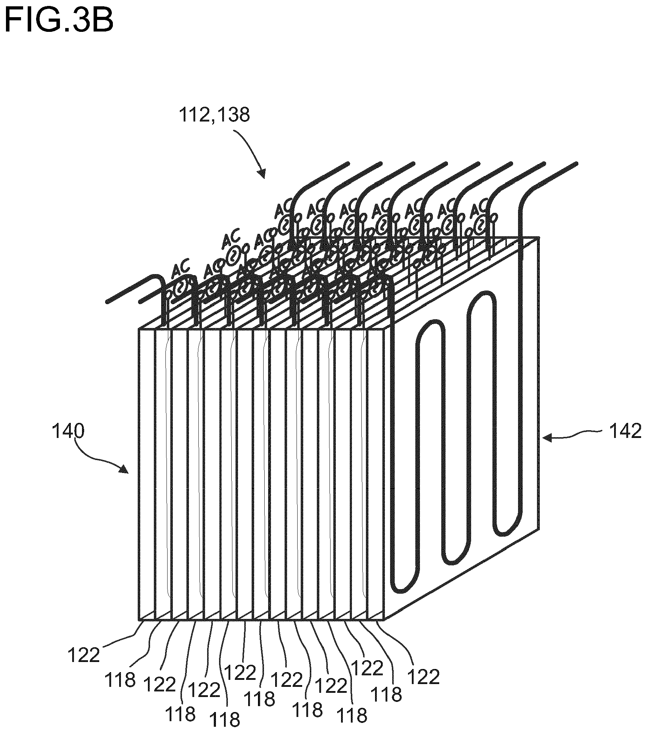

Figuren 3A und 3B zeigen exemplarisch zwei Ausführungsbeispiele der Vorrichtung 112, in Explosionszeichnung (Figur 3A) und in perspektivischer Darstellung (Figur 3B). Die Spule 110 ist eingerichtet durch die Beaufschlagung mit der Wechselspannung mindestens ein elektromagnetisches Feld zu erzeugen. Die Rohrleitung 120 und die Spule 110 sind derart angeordnet, dass das elektromagnetische Feld der Spule 110 einen elektrischen Strom in der Rohrleitung 120 induziert. Insbesondere kann ein Abstand der Rohrleitung 120 und der Spule 110 derart sein, dass die Rohrleitung 120 in dem elektromagnetischen Feld der Spule 110 angeordnet ist. Der elektrische Strom erwärmt die Rohrleitung 120 durch Joulesche Wärme, welche bei Durchgang des elektrischen Stromes durch leitendes Rohrmaterial entsteht, zum Erhitzen des Fluides.

Die Vorrichtung 112 kann eine Mehrzahl von Spulenarrays 118 und/oder Rohrsystemen 122 aufweisen. Das Spulenarray 118 kann einem Verlauf der Rohrleitung 122 angepasst sein. Insbesondere kann das Spulenarray 118 einem sich Verlauf längs der Rohrleitung 120 ändernden Prozesswärmebedarf angepasst sein. Beispielsweise kann das Spulenarray 118 derart ausgestaltet sein, dass eine dem Prozess und Verlauf der Rohrleitungen 120 angepasster Energieeintrag möglich ist.

Die Spulenarrays 118 und die Rohrsysteme 122 können in einer horizontalen Richtung alternierend in mindestens einem Stapel 138 angeordnet sein. Insbesondere kann ein Spulenarray 118 jeweils zwischen zwei Rohrsystemen 122 angeordnet sein. In der in Figur 3A gezeigten Ausführungsform kann der Stapel 138 an einem Ende, beispielsweise einer Frontseite 140, ein Spulenarray 118 aufweisen, wobei der Stapel 138 in eine horizontale Richtung des Stapels 138 abwechselnd Rohrsysteme 122 und weitere Spulenarrays 118 aufweist. An einer Rückseite 142 des Stapels 138 kann ein Rohrsystem 122 angeordnet sein. Denkbar sind aber auch Ausführungsformen mit einem abschließenden Spulenarray 118. In der in Figur 3B gezeigten Ausführungsform kann der Stapel 138 an der Frontseite 140 und der Rückseite 142 ein Rohrsystem 122 aufweisen, wobei der Stapel 138 in eine horizontale Richtung des Stapels 138 abwechselnd Spulenarrays 118 und Rohrsysteme 122 aufweist. Die Vorrichtung 112 kann eine unterschiedliche oder gleiche Anzahl von Rohrsystemen 122 und Spulenarrays 118 aufweisen. Beispielsweise kann die Vorrichtung 112 N Rohrsysteme 122 und O Spulenarray 118 aufweisen, wobei N und O natürliche Zahlen größer oder gleich zwei sind. Beispielsweise kann die Vorrichtung 112 mindestens zwei, drei, vier, fünf oder auch mehr Spulenarrays 118 und Rohrsysteme 122 aufweisen. Durch ein derartiges Stacking von Rohrsystemen 122 und Spulenarrays 118 können Röhrenöfen der benötigten Kapazität zusammengestellt werden. Durch Nutzung der jeweiligen front- und rückseitigen elektromagnetischen Felder von Spulenarrays 118 links und rechts eines Rohrsystems 122 zur Heizung des Rohrsystems 122 können Feldverluste gering gehalten werden. Weiter vorteilhaft kann eine gegenseitige Feldverstärkung der Spulenarrays 118 links und rechts eines Rohrsystems 122 sein. Weiter vorteilhaft kann das symmetrische Feld um das jeweilige Rohrsystem 122 sein.

Der Stapel 138 kann mindestens ein Kompensationsspulenarray aufweisen. Das Kompensationsspulenarray kann eingerichtet sein ein front- und/oder rückseitiges elektromagnetisches Feld des Stapels 138 möglichst gering zu halten. Der Stapel kann an den freien Enden durch eine Kombination aus für niedrige Temperaturen, beispielsweise Vorwärmer oder Edukt-Verdampfer, genutzter Rohrleitung oder genutztem Rohrsystem und Kompensationsspulenarray derart abgeschlossen sein, dass ein externes elektromagnetisches Restfeld möglichst gering ist. Beispielsweise kann das jeweils letzte Spulenarray 118 des Stapels 138 als Kompensationsspulenarray ausgestaltet sein.

Die Vorrichtung 112 kann mindestens einen Wärmeisolator 144 aufweisen, siehe beispielsweise Figur 1B, welcher eingerichtet ist die Spule 110, insbesondere das Spulenarray 118, von der Temperatur der Rohrleitung 120, insbesondere dem Rohrsystem 122, zu entkoppeln. Beispielsweise kann das im Wesentlichen planare Spulenarray 118 in eine elektrisch nicht leitfähige und nicht magnetische Wärmeisolationsmasse eingebettet sein. Der Wärmeisolator 144 kann mindestens ein Element aufweisen ausgewählt aus der Gruppe bestehend aus: keramischen Fasermatten, einem Keramikschaum, Feuerfeststeinen, Feuerfestbeton.

Die Spule 110 kann mindestens ein Leiterrohr 146 aufweisen, siehe beispielsweise Figuren 1A und 1B. Die Vorrichtung 112 kann eingerichtet sein mindestens ein Kühlmittel durch das Leiterrohr 146 zu leiten. Eine Verlustleistung der Spule und ein Wärmeeintrag durch den Wärmeisolator 144 aus einem Prozessraum, in welchem die Rohrleitungen 120 angeordnet sind, in die Spulen 110 können durch eine direkte Kühlung der Spulen 110 abgeführt werden. Beispielsweise kann die Spule 110 aus Kupfer- oder Aluminiumrohren ausgestaltet sein, durch welche das Kühlmittel geleitet wird. Das Leiterrohr 146 kann druckfest ausgestaltet sein. So kann es möglich sein das Leiterrohr 146 direkt mit Kesselspeisewasser zu beaufschlagen und entweder in dem Leiterrohr 146 direkt oder in einer externen Dampftrommel nach einer Drosselung des Druckwassers aus dem Leiterrohr 146 Dampf zu erzeugen. Der Dampf kann als Prozess- oder Maschinendampf Verwendung finden.

### Bezugszeichenliste

- 110: Spule
- 112: Vorrichtung
- 114: Wechselspannungsquelle
- 116: Verbindungselement
- 118: Spulenarray
- 120: Rohrleitung
- 122: Rohrsystem
- 124: Einlass
- 126: Auslass
- 128: Gasraum
- 130: Länge
- 132: Höhe
- 134: Breite
- 136: Leckageerkennungsvorrichtung
- 138: Stapel
- 140: Frontseite
- 142: Rückseite
- 144: Wärmeisolator
- 146: Leiterrohr

## Patentansprüche

1. Vorrichtung (112) zum Erhitzen eines Fluides, wobei die Vorrichtung Teil einer Anlage ist, wobei die Anlage eingerichtet ist, mindestens ein Verfahren durchzuführen ausgewählt aus der Gruppe bestehend aus: Steamcracking; Steamreforming; und Alkandehydrierung, die Vorrichtung umfasst
- mindestens eine elektrisch leitfähige Rohrleitung (120) zur Aufnahme des Fluides
- mindestens eine elektrisch leitfähige Spule (110),
- mindestens eine Wechselspannungsquelle (114), welche mit der Spule (110) verbunden ist und eingerichtet ist, die Spule (110) mit einer Wechselspannung zu beaufschlagen,
wobei die Spule (110) eingerichtet ist durch die Beaufschlagung mit der Wechselspannung mindestens ein elektromagnetisches Feld zu erzeugen, wobei die Rohrleitung (120) und die Spule (110) derart angeordnet sind, dass das elektromagnetische Feld der Spule (110) einen elektrischen Strom in der Rohrleitung (120) induziert, welcher die Rohrleitung (120) durch Joulesche Wärme, welche bei Durchgang des elektrischen Stromes durch leitendes Rohrmaterial entsteht, zum Erhitzen des Fluides erwärmt,
wobei die Rohrleitung (120) in einem Gasraum (128) angeordnet ist, wobei die Rohrleitung (120) frei hängend in dem Gasraum (128) angeordnet ist, wobei eine Länge (130) und/oder Breite (134) und/oder Höhe (132) des Gasraumes (128) derart ausgestaltet ist, um Lage- und Längenänderungen durch Erwärmung zuzulassen.

2. Vorrichtung (112) nach dem vorhergehenden Anspruch, **dadurch gekennzeichnet, dass** die Vorrichtung (112) eine Mehrzahl von Spulen (110) aufweist, wobei die Spulen (110) ein im Wesentlichen planares Spulenarray (118) bilden.

3. Vorrichtung (112) nach dem vorhergehenden Anspruch, wobei das Spulenarray (118) einem Verlauf der Rohrleitung (120) angepasst ist.

4. Vorrichtung (112) nach einem der zwei vorhergehenden Ansprüche, **dadurch gekennzeichnet, dass** die Vorrichtung (112) eine Mehrzahl von Wechselspannungsquellen (114) aufweist, wobei jeder Spule (110) des Spulenarrays (118) eine Wechselspannungsquelle (114) zugeordnet ist, wobei die Wechselspannungsquellen (114) jeweils mit einer Regelungsmöglichkeit zu Anpassung einer Höhe und/oder Frequenz der Wechselspannung ausgestaltet sind, wobei die Wechselspannungsquellen (114) unabhängig voneinander elektrisch regelbar sind.

5. Vorrichtung (112) nach einem der vorhergehenden Ansprüche, **dadurch gekennzeichnet, dass** die Vorrichtung (112) eine Mehrzahl von Rohrleitungen (120) aufweist, wobei die Rohrleitungen (120) durchverbunden sind und so ein im Wesentlichen planares Rohrsystem (122) zur Aufnahme des Fluides bilden.

6. Vorrichtung (112) nach dem vorhergehenden Anspruch, **dadurch gekennzeichnet, dass** die Vorrichtung (112) eine Mehrzahl von Spulenarrays (118) und/oder Rohrsystemen (122) aufweist, wobei die Spulenarrays (118) und die Rohrsysteme (122) in einer horizontale Richtung alternierend in mindestens einem Stapel (138) angeordnet sind.

7. Vorrichtung (112) nach einem der vorhergehenden Ansprüche, **dadurch gekennzeichnet, dass** die Vorrichtung (112) mindestens einen Wärmeisolator (144) aufweist, welcher eingerichtet ist die Spulen (110) von der Temperatur der Rohrleitung (120) zu entkoppeln, wobei der Wärmeisolator (144) mindestens ein Element aufweist ausgewählt aus der Gruppe bestehend aus: keramischen Fasermatten, einem Keramikschaum, Feuerfeststeinen, Feuerfestbeton.

8. Vorrichtung (112) nach einem der vorhergehenden Ansprüche, **dadurch gekennzeichnet, dass** die Spule (110) mindestens ein Leiterrohr (146) aufweist, wobei die Vorrichtung (112) eingerichtet ist mindestens ein Kühlmittel durch das Leiterrohr (146) zu leiten.

9. Vorrichtung (112) nach dem vorhergehenden Anspruch, **dadurch gekennzeichnet, dass** das Leiterrohr (146) druckfest ausgestaltet ist.

10. Vorrichtung (112) nach einem der vorhergehenden Ansprüche, **dadurch gekennzeichnet, dass** die Vorrichtung (112) eingerichtet ist, den Gasraum (128) mit einem chemisch inerten und sauerstofffreien Inertgas zu durchströmen.

11. Vorrichtung (112) nach einem der vorhergehenden Ansprüche, **dadurch gekennzeichnet, dass** die Vorrichtung (112) mindestens eine Leckageerkennungsvorrichtung (136) aufweist, wobei die Leckageerkennungsvorrichtung (136) eingerichtet ist eine Gaszusammensetzung an einem Ausgang des Gasraumes zu überwachen.

12. Anlage umfassend mindestens eine Vorrichtung (112) nach einem der vorhergehenden Ansprüche, wobei die Anlage ausgewählt ist aus der Gruppe bestehend aus: einem Steamcracker, einem Steamreformer, einer Vorrichtung zur Alkandehydrierung.

13. Verfahren zum Erhitzen eines Fluides unter Verwendung einer Vorrichtung (112) gemäß einem der vorhergehenden, eine Vorrichtung betreffenden Ansprüche, wobei das Verfahren die folgenden Schritte umfasst:
- Bereitstellen mindestens einer elektrisch leitfähigen Rohrleitung (120) zur Aufnahme des Fluides
- Aufnahme des Fluides in die Rohrleitung (120)
- Bereitstellen mindestens einer elektrisch leitfähigen Spule (110)
- Bereitstellen mindestens einer Wechselspannungsquelle (114), wobei die Spule (110) mit der Wechselspannungsquelle (114) verbunden ist, und Beaufschlagen der Spule (110) mit einer Wechselspannung
- Erzeugen mindestens eines elektromagnetischen Feldes durch die Beaufschlagung der Spule (110) mit der Wechselspannung
- Induzieren eines elektrischen Stroms in der Rohrleitung (120) durch das elektromagnetische Feld der Spule (110), welcher die Rohrleitung (120) durch Joulesche Wärme, welche bei Durchgang des elektrischen Stromes durch leitendes Rohrmaterial entsteht, zum Erhitzen des Fluides erwärmt.
